# EUROPÄISCHE PATENTSCHRIFT

(11) **EP 0 666 788 B1**
(45) Veröffentlichungstag und Bekanntmachung des Hinweises auf die Patenterteilung: **26.03.1997**
(21) Anmeldenummer: 93922926.6
(22) Anmeldetag: 09.10.1993
(51) Int. Cl.: B29B 9/06, B02C 18/22, B26D 7/06

(54) **GRANULIERVORRICHTUNG FÜR STRANGMATERIALIEN**
GRANULATOR FOR EXTRUDED MATERIALS
DISPOSITIF DE GRANULATION DE MATIERES EXTRUDEES

(30) Priorität: 28.10.1992 DE 4236451
(43) Veröffentlichungstag der Anmeldung: 16.08.1995
(73) Patentinhaber: C.F. SCHEER & CIE. GMBH & CO., D-70435 Stuttgart (DE)
(72) Erfinder: HILD, Friedrich, D-71717 Beilstein (DE); KREUZ, Ulrich, D-71729 Erdmannhausen (DE)
(74) Vertreter: Klunker . Schmitt-Nilson . Hirsch
(86) Internationale Anmeldenummer: EP9302768
(87) Internationale Veröffentlichungsnummer: WO9409958

(56) Entgegenhaltungen:
- EP-A- 0 013 575
- DE-A- 1 454 777
- DE-A- 2 538 175
- FR-A- 2 162 471
- GB-A- 655 185
- GB-A- 770 704
- GB-A- 1 129 874
- US-A- 4 759 248

## Beschreibung

Die Erfindung betrifft eine Granuliervorrichtung für Strangmaterialien mit einer Einzugsvorrichtung zum Erfassen des Strangmaterials und zu dessen Förderung zu einer nachfolgenden, gegen die Förderrichtung des Strangmaterials rotierenden Schermesserwalze, welche gegen ein feststehendes Amboßmesser arbeitet, wobei die Einzugsvorrichtung eine untere und eine obere Einzugswalze umfaßt, von denen mindestens eine antreibbar ist, wobei der unteren Einzugswalze ein Abstreifmesser zugeordnet ist und wobei das Abstreifmesser und das Amboßmesser an einem zwischen der unteren Einzugswalze und der Schermesserwalze angeordneten Träger festgelegt sind.

Granuliervorrichtungen für Strangmaterialien, das heißt Kunststoffstränge, Glasfaserstränge etc. der eingangs beschriebenen Art, sind bekannt (DE 29 01 018 A1).

Die bei der Stranggranulierung auftretenden Kräfte an den Lagern der Einzugsvorrichtung sowie der Schermesserwalze sind sehr groß und bedürfen einer ausreichend stabil ausgelegten Konstruktion der Lager. Darüber hinaus ist es wichtig, daß ein exakt einstellbarer, feinster Spalt zwischen der unteren Einzugswalze und dem Abstreifmesser während des Betriebs sichergestellt werden kann und eine noch genauere Justierung ist zwischen der Schermesserwalze und dem Amboßmesser notwendig. Nur wenn diese Voraussetzungen gegeben sind, läßt sich ein qualitativ hochwertiges Granulat erzeugen und ein störungsfreier Betrieb des Granulators gewährleisten.

Bislang war es notwendig, bei einer Reinigung der Granuliervorrichtung, beispielsweise beim Wechsel des zu granulierenden Materials, die untere Einzugswalze auszubauen, wenn sichergestellt werden sollte, daß von dem vorhergehend verarbeiteten Material nichts in das nachfolgend zu verarbeitende Granulat verschleppt wird.

Eine etwas bessere Reinigungsmöglichkeit besteht auf Seiten der Schermesserwalze, da diese nicht ständig an dem Amboßmesser anliegt, sondern das Amboßmesser im Zwischenraum zwischen zwei aufeinanderfolgenden Schneiden der Messerwalze im wesentlichen freigibt.

Allerdings haben Arbeiten am Träger von Abstreifmesser und Amboßmesser stets den Ausbau, zumindest der unteren Einzugswalze oder der Schermesserwalze, erfordert.

Aufgabe der Erfindung ist es, eine Granuliervorrichtung vorzuschlagen, bei der Reinigungsarbeiten im Bereich zwischen unterer Einzugswalze und Träger beziehungsweise zwischen Träger und Schermesserwalze vereinfacht sind.

Diese Aufgabe wird bei einer Granuliervorrichtung der eingangs beschriebenen Art erfindungsgemäß dadurch gelöst, daß die untere Einzugswalze zwischen einer Betriebs- und einer Außerbetriebsstellung bewegbar ist, wobei sie in ihrer Außerbetriebsstellung von dem Träger und dem Abstreifmesser entfernt angeordnet ist, und daß die untere Einzugswalze in ihrer Betriebsstellung verriegelbar ist.

Überraschend hat sich gezeigt, daß trotz der in der Granuliervorrichtung auftretenden Kräfte die Einzugswalze zwischen einer Betriebs- und einer Außerbetriebsstellung bewegbar ausgelegt werden kann, wenn diese in ihrer Betriebsstellung sicher verriegelbar ist.

Durch das Lösen der Verriegelung wird eine Bewegung der unteren Einzugswalze aus der Betriebs- in die Außerbetriebsstellung möglich, wobei dabei gleichzeitig der Raum zwischen der unteren Einzugswalze und dem Abstreifmesser vergrößert und für die Reinigung und sonstige Kontrollmaßnahmen zugänglich wird.

Im Falle, daß bei einer Granuliervorrichtung kontinuierlich identische Strangmaterialien verarbeitet werden ist der Gesichtspunkt der verbesserten Reinigungsfreundlichkeit im Bereich zwischen der unteren Einzugswalze und dem Abstreifmesser von untergeordneter Bedeutung, während die Wartungsfreundlichkeit im Hinblick auf die Schermesserwalze beziehungsweise das zugehörige Amboßmesser, das regelmäßig schneller verschleißt als die Schermesserwalze, in den Vordergrund tritt. Hier kann alternativ zu der ersten Lösung vorgesehen sein, daß bei einer Granuliervorrichtung der eingangs beschriebenen Art die Schermesserwalze zwischen einer Betriebs- und einer Außerbetriebsstellung bewegbar ist, wobei sie in ihrer Außerbetriebsstellung von dem Träger und von dem Amboßmesser entfernt angeordnet ist, und daß die Schermesserwalze in ihrer Betriebsstellung verriegelbar ist.

Selbstverständlich kann vorgesehen sein, daß sowohl die Schermesserwalze als auch die untere Einzugswalze zwischen einer Betriebs- und einer Außerbetriebsstellung bewegbar sind, so daß der Träger von Abstreifmesser und Amboßmesser von beiden Seiten, das heißt, sowohl von Seiten der unteren Einzugswalze als auch von Seiten der Schermesserwalze für Reinigungsarbeiten oder Wartungs- und Instandhaltungsarbeiten, zum Beispiel zum Austausch des Amboßmessers, zugänglich wird.

Vorzugsweise wird vorgesehen, daß die untere Einzugswalze und/oder die Schermesserwalze in ihrer Außerbetriebsstellung ebenfalls verriegelbar sind. Dies vermindert die Gefahr von Beschädigungen dieser Elemente der Granuliervorrichtung und hilft Unfälle bei Wartungs- und Reinigungsarbeiten zu vermeiden.

Bei einer weiteren bevorzugten Ausführungsform ist vorgesehen, daß der Träger, vorzugsweise ein gemeinsamer Träger von Abstreifmesser und Amboßmesser, von einer Betriebs- in eine Außerbetriebsstellung bewegbar und in der Betriebsstellung feststellbar ist.

Mit dieser Option kann selbst bei Granuliervorrichtungen, bei denen nur die untere Einzugswalze oder aber nur die Schermesserwalze zwischen einer Betriebs- und einer Außerbetriebsstellung bewegbar gelagert sind gegenüber der jeweils feststehenden Walze eine Abstandsvergrößerung herbeigeführt werden, welche zumindest die Reinigungsmöglichkeiten verbessert. Sind die Betriebs- und die Außerbetriebsstellungen weit genug auseinander, so eröffnet sich auch von Seiten der Schermesserwalze die Möglichkeit, das Amboßmesser ohne Demontage der Schermesserwalze der Granuliervorrichtung auszutauschen.

Häufig wird die Einzugsvorrichtung über die untere Einzugswalze angetrieben, während die obere Einzugswalze als Schleppwalze mitläuft. Der Antrieb der unteren Einzugswalze wird normalerweise mit dem Antrieb der Schermesserwalze synchronisiert, beispielsweise über ein Zahnradgetriebe.

Überraschend hat sich herausgestellt, daß wenn für die Bewegung der unteren Einzugswalze beziehungsweise der Schermesserwalze aus der Betriebs- in die Außerbetriebsstellung und wieder zurück eine Schwenkbewegung ausgeführt wird, Probleme bei dem Wiedereingreifen der Zahnräder des die Einzugswalze mit der Schermesserwalze synchronisierenden Getriebes ineinander vermieden werden können, selbst wenn die eine oder die andere Walze mittlerweile etwas gedreht worden sein sollte.

Vorteilhafterweise wird die Kraftaufnahme bei der Lagerung der unteren Einzugswalze beziehungsweise der Schermesserwalze und der Verriegelung in der Betriebsstellung entkoppelt, indem man die untere Einzugswalze und/oder die Schermesserwalze in ihrer jeweiligen Betriebsstellung durch Auflagerelemente beidseits stützt.

Unter Sicherheitsgesichtspunkten sollte bevorzugt die untere Einzugswalze und/oder die Schermesserwalze in ihrer jeweiligen Betriebsstellung beidseitig verriegelbar sein, das heißt, daß zwei unabhängig voneinander arbeitende Verriegelungsmechanismen beidseits der jeweiligen Walzen vorhanden sind.

Im Hinblick auf Betriebssicherheit wird die Granuliervorrichtung vorzugsweise mit einer aufsetzbaren Handhabungsvorrichtung ausgestattet, mittels derer die Verriegelung der unteren Einzugswalze oder der Schermesserwalze in der Betriebs- und gegebenenfalls auch in der Außerbetriebsstellung im zwangsweisen Zweihandbetrieb lösbar ist. Damit ist sichergestellt, daß die Bedienungsperson beide Hände an der Handhabungsvorrichtung und damit auch außerhalb des Gefährdungsbereichs hat, wenn die Verriegelung bei der einen oder anderen Walze gelöst wird. Bevorzugt wird dabei die Handhabungsvorrichtung einen Bügel umfassen, welcher einen Hebel zum Verschwenken der Walze(n) von der einen in die andere Stellung bildet.

Die Erfindung wird im folgenden anhand der Zeichnungen noch näher erläutert.

Es zeigen im einzelnen:
- Figur 1:: eine Schnittansicht durch eine geschlossene Granuliervorrichtung;
- Figur 2:: eine Schnittansicht durch die Granuliervorrichtung gemäß Figur 1 bei geöffnetem Deckel;
- Figur 3:: Detail einer Lagerung einer Einzugswalze der Granuliervorrichtung gemäß Figuren 1 und 2;
- Figur 4:: einen Rastbolzen zur Fixierung der unteren Einzugswalze in der Betriebsstellung;
- Figur 5:: eine Handhabungsvorrichtung zum Verschwenken der unteren Einzugswalze; und
- Figur 6:: Seitenansicht der Handhabungsvorrichtung von Figur 5.

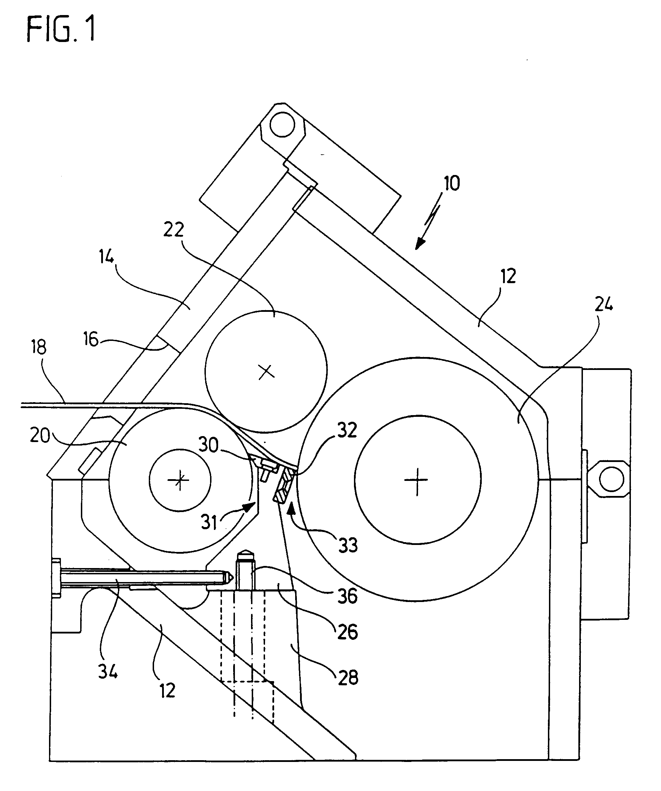

Figur 1 zeigt eine insgesamt mit dem Bezugszeichen 10 bezeichnete Granuliervorrichtung mit einem Gehäuse 12, welches an seiner vorderen Oberseite mittels eines Deckels 14 verschlossen werden kann. Der Deckel 14 umfaßt einen Durchlaß 16, durch den Strangmaterial 18 in die Granuliervorrichtung 10 gelangt. Das Strangmaterial 18 wird im Inneren der Granuliervorrichtung zunächst von einer unteren Einzugswalze 20 erfaßt und zwischen dieser und einer oberen Einzugswalze 22 mit definierter Geschwindigkeit einer Schermesserwalze 24 zugeführt. Die untere und die obere Einzugswalze sowie die Schermesserwalze 24 sind nur schematisch mit ihren Außenumfängen dargestellt.

Zwischen der unteren Einzugswalze 20 und der Schermesserwalze 24 ist ein Träger 26 angeordnet, welcher an einem Sockelteil 28 des Gehäuses 12 befestigt ist. An seiner Oberseite hält der Träger 26 in Richtung zur unteren Einzugswalze 20 weisend ein Abstreifmesser 30 und parallel dazu jedoch zur Schermesserwalze 24 hin orientiert ein Amboßmesser 32. Das Abstreifmesser 30 dient der Säuberung der unteren Einzugswalze 20, die häufig strukturiert ist, liegt an dieser nahezu gleitend an und reinigt diese von Strangmaterialresten.

Das Amboßmesser 32 bildet mit den Schneiden (nicht dargestellt) der Schermesserwalze 24 einen extrem engen, justierbaren Spalt.

Im Laufe der Zeit wird es notwendig, die Messer der Schermesserwalze 24 nachzuschleifen, was in einer Verringerung des Schermesserwalzendurchmessers resultiert. Um dies auszugleichen, läßt sich über Justierbolzen 34 der Träger 26 in Richtung zur Schermesserwalze 24 hin verschieben, wobei dann selbstverständlich die Justage des Abstreifmessers 30 in Bezug auf die untere Einzugswalze 20 überprüft werden muß.

Aus Figur 1 wird ersichtlich, daß insbesondere der Raum 31 zwischen der unteren Einzugswalze 20 und dem Träger 26 sehr gering ist und ohne Demontage der Walze 20 kaum eine Reinigung zuläßt, die mit hinreichender Sicherheit Fremdmaterial bei Chargenwechsel in der nachfolgenden Charge vermeidet.

Die vorliegende Erfindung löst dieses Problem damit, daß sie den bei offenem Deckel 14 vorhandenen Raum im Gehäuse ausnutzt für eine Bewegung der unteren Einzugswalze aus einer Betriebsstellung in eine Außerbestriebsstellung.

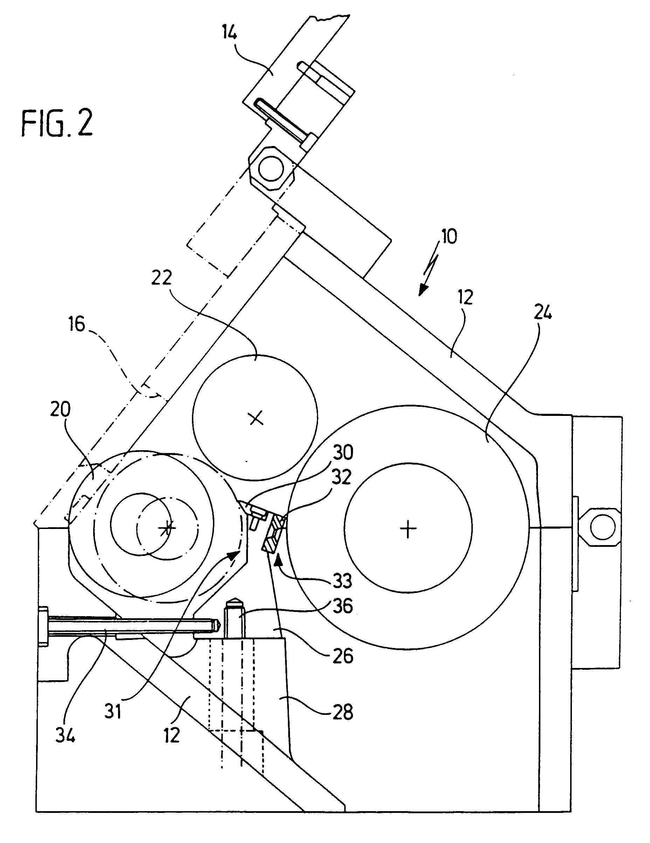

Zur weiteren Beschreibung wird auf die Figur 2 verwiesen, die die Granuliervorrichtung 10 aus Figur 1 bei geöffnetem Deckel 14 zeigt.

In Figur 2 ist in strichpunktierter Darstellung die untere Einzugswalze 20 in ihrer Betriebsstellung dargestellt, während die durchgezogene Darstellung die untere Einzugswalze 20 in ihrer Außerbetriebsstellung zeigt.

Die obere Einzugswalze 22 ist bevorzugt verschwenkbar gelagert und kann aus dem Raum zwischen der unteren Einzugswalze 20 und der Schermesserwalze 24 herausgeschwenkt werden. Damit wird der Raum oberhalb der unteren Einzugswalze 20 dem Träger 26 und der Schermesserwalze 24 für Reinigungs- und Wartungsarbeiten voll zugänglich.

Nachfolgend wird dann die untere Einzugswalze 20 aus der Betriebsstellung (Figur 2 strichpunktierte Darstellung) in die Außerbetriebsstellung (Figur 2 durchgezogene Darstellung) verschwenkt und damit auch der Raum 31 zwischen der unteren Einzugswalze 20 und dem Träger 26 für Reinigungs- und/oder Wartungsarbeiten gut zugänglich.

Dasselbe Prinzip läßt sich selbstverständlich auf die Bewegung der Schermesserwalze 24 zwischen einer Betriebs- und einer Außerbetriebsstellung anwenden, wobei diese sich in die entgegengesetzte Richtung zu der unteren Einzugswalze 20 bewegt. Falls sowohl die untere Einzugswalze 20 als auch die Schermesserwalze 24 zwischen einer Außerbetriebs- und einer Betriebsstellung hin und her bewegbar sind, besteht die Möglichkeit, den Träger 26 von beiden Seiten her für Reinigungs- und Wartungsarbeiten frei zugänglich zu machen, ohne daß eine der beiden Walzen demontiert werden müßte, was einen beträchtlichen Arbeitsaufwand bedeuten würde.

Bei einer weiteren Ausführungsform der Erfindung kann es bereits ausreichend sein, wenn eine der beiden Walzen, nämlich die untere Einzugswalze 20 oder die Schermesserwalze 24, zwischen einer Betriebs- und einer Außerbetriebsstellung bewegbar ist, um beide Räume, das heißt sowohl den Raum zwischen dem Träger 26 und der unteren Einzugswalze 20 als auch den Raum 33 zwischen dem Träger 26 und der Schermesserwalze 24 für Reinigungs- und Wartungsarbeiten zugänglich zu machen, da hier vorgesehen ist, daß der Träger 26 selbst ebenfalls zwischen einer Betriebs- und einer Außerbetriebsstellung hin und her bewegbar ist.

In den Figuren 1 und 2 ist ein Fixierbolzen 36 gezeigt, welcher den Träger 26 in seiner Betriebsstellung hält. Nach einem Lösen des Fixierbolzens 36 wird der Träger 26 durch eine Bewegung in eine Außerbetriebsstellung (nicht gezeigt) zugänglich, welche im Falle von Figur 2 beispielsweise zur linken Seite hin erfolgen könnte.

Die justierte Betriebsstellung für den Träger 26 wird durch ein Anschlagelement am Justierbolzen 34 definiert, so daß der Träger 26 wieder in seine alte Position zurückgefahren und dann mittels des Fixierbolzens 36 festgelegt werden kann.

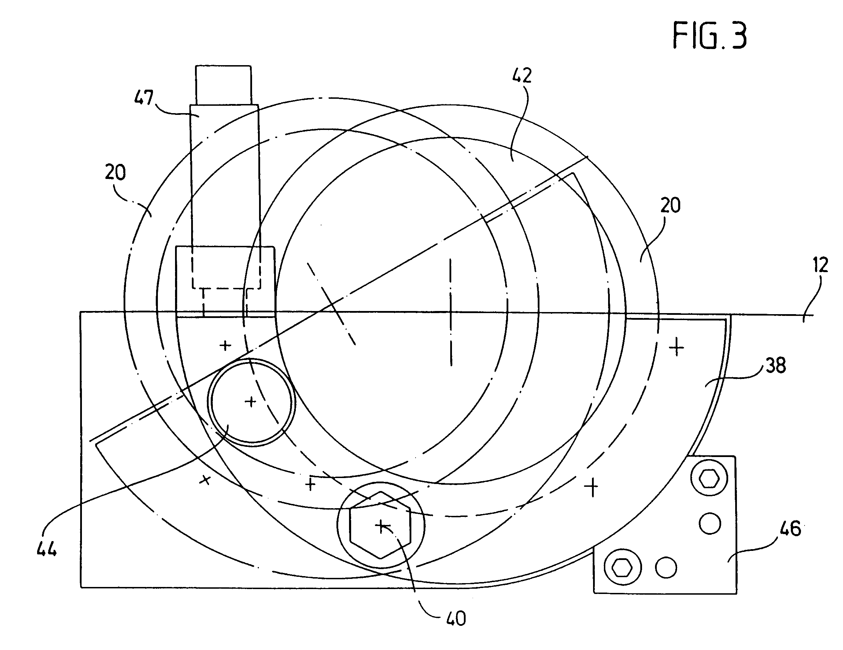

Figur 3 zeigt etwas detaillierter eine der möglichen Ausführungsformen für eine verschwenkbare Lagerung der unteren Einzugswalze 20. Die untere Einzugswalze 20 ist in ihrer Betriebs- und in ihrer Außerbetriebsstellung lediglich in Form von Umfangskreisen gezeigt. Figur 3 zeigt eine verschwenkbare Lagerschale 38, welche um den Drehpunkt 40 herum um einen vorgegebenen Winkelbetrag verschwenkbar ist. Die Lagerschale 38 spannt ein Drehlager 42 (nur im Außenumfang dargestellt) ein und ist am Gehäuse 12 mittels eines Rastbolzens 44 in der Betriebs- und in der Außerbetriebsstellung verrastbar. In der Betriebsstellung liegt die Lagerschale 38 mit ihrem Außenumfang zusätzlich auf dem Auflager 46 auf, welches sämtliche über die untere Einzugswalze 20 einwirkenden Kräfte zusammen mit dem Drehlager 40 aufnimmt, so daß der Rastbolzen 44 nur die Funktion der Sicherung in der in die Betriebsstellung eingeschwenkten beziehungsweise in der Außerbetriebsstellung eingeschwenkten Position der Walze 20 erfüllen muß.

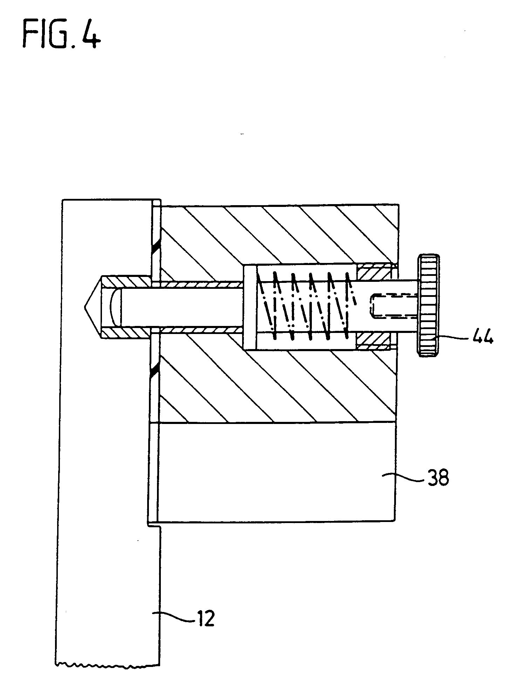

Figur 4 zeigt detailliert eine Lösung für einen Rastbolzen 44 im eingerasteten Zustand.

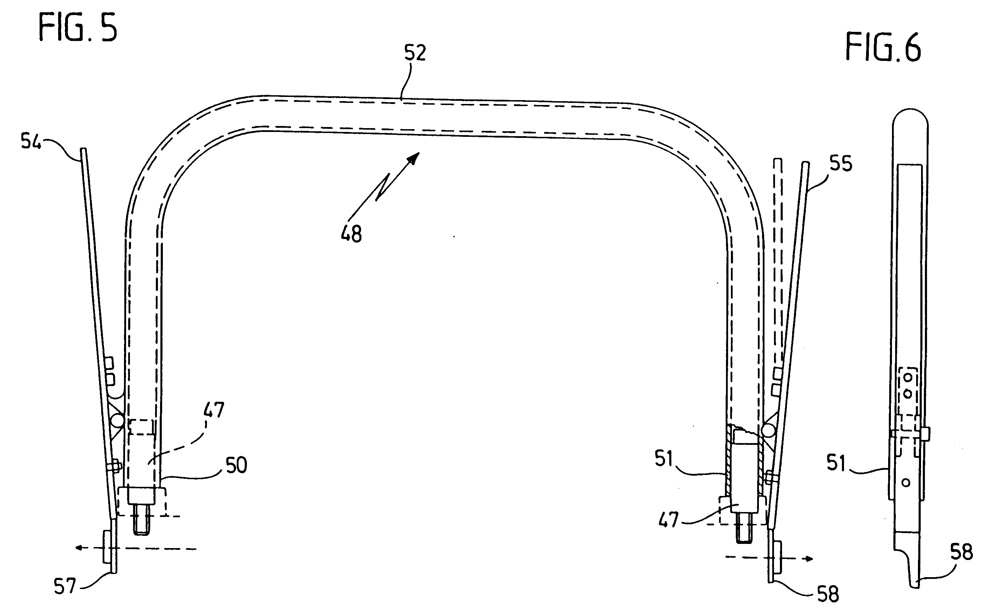

Figuren 5 und 6 schließlich zeigen ein Handhabungsgerät 48, welches von oben auf die Lagerschale 38 (Zapfen 47) mit seinen freien Enden 50, 51 aufsetzbar ist. Die beiden Enden 50, 51 des Handhabungsgeräts 48 sind über einen Bügel 52 verbunden. Zu beiden Seiten des Bügels 52 sind zwei Entrastungshebel 54, 55 angeordnet, welche mit ihren den freien Enden 50, 51 benachbarten freien Enden 57, 58 hinter den Kopf der Rastbolzen 44 greifen. Der Abstand der beiden Hebel 54, 55 ist so gewählt, daß diese gleichzeitig nur mit zwei Händen zu drücken sind, so daß eine Entrastung der Rastbolzen 44 beidseits der Walze 20 nur mit einer Zweihandbedienung erfolgen kann.

Der Bügel 52 kann gleichzeitig dazu verwendet werden, um die Verschwenkbewegung für die Walze 20 einzuleiten und diese sicher in die Außerbetriebsstellung zu überführen. Dort werden die Hebel 55, 54 wieder losgelassen, so daß die Rastbolzen 44 beidseits der Walze wieder in das Gehäuse 12 einrasten können, und die Walze 20 in ihrer Außerbetriebsstellung fixiert wird.

Selbstverständlich gilt die zuvor beschriebene Funktionsweise des Handhabungsgeräts in gleicher Weise, wenn eine Verschwenkbarkeit der Schermesserwalze bei der Granuliervorrichtung vorgesehen ist.

## Patentansprüche

1. Granuliervorrichtung (10) für Strangmaterialien (18) mit einer Einzugsvorrichtung (20, 22) zum Erfassen des Strangmaterials und dessen Förderung zu einer nachfolgenden, gegen die Förderrichtung des Strangmaterials rotierenden Schermesserwalze (24), welche gegen ein feststehendes Amboßmesser (32) arbeitet, wobei die Einzugsvorrichtung eine untere (20) und eine obere (22) Einzugswalze umfaßt, von denen mindestens eine antreibbar ist, wobei der unteren Einzugswalze ein Abstreifmesser (30) zugeordnet ist, und wobei das Abstreifmesser und das Amboßmesser an einem zwischen der unteren Einzugswalze und der Schermesserwalze angeordneten Träger (26) festgelegt sind,
dadurch gekennzeichnet, daß die untere Einzugswalze (20) zwischen einer Betriebs- und einer Außerbetriebsstellung bewegbar ist, wobei sie in ihrer Außerbetriebsstellung von dem Träger (26) und dem Abstreifmesser (30) entfernt angeordnet ist, und daß die untere Einzugswalze (20) in ihrer Betriebsstellung verriegelbar ist.

2. Granuliervorrichtung (10) für Strangmaterialien (18) mit einer Einzugsvorrichtung (20, 22) zum Erfassen des Strangmaterials und dessen Förderung zu einer nachfolgenden, gegen die Förderrichtung des Strangmaterials rotierenden Schermesserwalze (24), welche gegen ein feststehendes Amboßmesser (32) arbeitet, wobei die Einzugsvorrichtung eine untere (20) und eine obere (22) Einzugswalze umfaßt, von denen mindestens eine antreibbar ist, wobei der unteren Einzugswalze ein Abstreifmesser (30) zugeordnet ist, und wobei das Abstreifmesser und das Amboßmesser an einem zwischen der unteren Einzugswalze und der Schermesserwalze angeordneten Träger (26) festgelegt sind, dadurch gekennzeichnet, daß die Schermesserwalze (24) zwischen einer Betriebsstellung und einer Außerbetriebsstellung bewegbar ist, wobei sie in ihrer Außerbetriebsstellung von dem Träger (26) und von dem Amboßmesser (32) entfernt angeordnet ist, daß die Schermesserwalze (24) in ihrer Betriebsstellung verriegelbar ist, und daß die untere Einzugswalze (20) gegebenenfalls zwischen einer Betriebs- und einer Außerbetriebsstellung bewegbar ist, wobei sie hierbei in ihrer Außerbetriebsstellung von dem Träger (26) und dem Abstreifmesser (30) entfernt angeordnet ist, und wobei die untere Einzugswalze (20) in ihrer Betriebsstellung verriegelbar ist.

3. Granuliervorrichtung nach Anspruch 1 oder 2, dadurch gekennzeichnet, daß die untere Einzugswalze (20) und/oder die Schermesserwalze (24) in ihrer Außerbetriebsstellung verriegelbar sind.

4. Granuliervorrichtung nach einem der Ansprüche 1 bis 3, dadurch gekennzeichnet, daß der Träger (26) von einer Betriebs- in eine Außerbetriebsstellung bewegbar und in der Betriebsstellung feststellbar ist.

5. Granuliervorrichtung nach einem der Ansprüche 1 bis 4, dadurch gekennzeichnet, daß die untere Einzugswalze (20) und/oder die Schermesserwalze (24) zwischen ihrer jeweiligen Betriebs- und Außerbetriebsstellung verschwenkbar sind.

6. Granuliervorrichtung nach einem der Ansprüche 1 bis 5, dadurch gekennzeichnet, daß die untere Einzugswalze (20) und/oder die Schermesserwalze (24) in ihrer jeweiligen Betriebsstellung durch Auflagerelemente (46) gestützt sind.

7. Granuliervorrichtung nach einem der Ansprüche 1 bis 6, dadurch gekennzeichnet, daß die untere Einzugswalze (20) und/oder die Schermesserwalze (24) in ihrer jeweiligen Betriebsstellung beidseitig verriegelbar sind.

8. Granuliervorrichtung nach einem der Ansprüche 1 bis 7, dadurch gekennzeichnet, daß die Verriegelung (44) der unteren Einzugswalze (20) und/oder der Schermesserwalze (24) in der Betriebs- und/oder Außerbetriebsstellung mittels einer aufsetzbaren Handhabungsvorrichtung (48) mit Zweihandbedienung lösbar ist, und daß die Handhabungsvorrichtung (48) einen Bügel (52) umfaßt, welcher einen Hebel zum Verschwenken der Walze(n) (20; 24) von der einen in die andere Stellung bildet.

## Claims

1. Granulator for strand materials with a feed device for taking up the strand material and conveying it to a subsequent shearing blade roller rotating contrary to the direction of conveyance of the strand material, said roller operating against a stationary anvil blade, wherein the feed device comprises a lower and an upper feed roller, at least one of said rollers being drivable, wherein a wiper blade is associated with the lower feed roller, and wherein the wiper blade and the anvil blade are fixed in position on a carrier arranged between the lower feed roller and the shearing blade roller, characterized in that the lower feed roller (20) is movable between an operating and a non-operating position, wherein in its non-operating position it is arranged at a distance from the carrier (26) and the wiper blade (30), and that the lower feed roller (20) is lockable in its operating position.

2. Granulator for strand materials with a feed device for taking up the strand material and conveying it to a subsequent shearing blade roller rotating contrary to the direction of conveyance of the strand material, said roller operating against a stationary anvil blade, wherein the feed device comprises a lower and an upper feed roller, at least one of said rollers being drivable, wherein a wiper blade is associated with the lower feed roller, and wherein the wiper blade and the anvil blade are fixed in position on a carrier arranged between the lower feed roller and the shearing blade roller, characterized in that the shearing blade roller (24) is movable between an operating position and a non-operating position, wherein in its non-operating position it is arranged at a distance from the carrier (26) and from the anvil blade (32), that the shearing blade roller (24) is lockable in its operating position, and that the lower feed roller (20) is movable when applicable between an operating and a non-operating position, wherein in its non-operating position it is arranged at a distance from the carrier (26) and the wiper blade (30), and wherein the lower feed roller (20) is lockable in its operating position.

3. Granulator as defined in claim 1 or 2, characterized in that the lower feed roller (20) and/or the shearing blade roller (24) are lockable in their non-operating positions.

4. Granulator as defined in any one of claims 1 to 3, characterized in that the carrier (26) is movable from an operating into a non-operating position and securable in the operating position.

5. Granulator as defined in any one of claims 1 to 4, characterized in that the lower feed roller (20) and/or the shearing blade roller (24) are pivotable between their respective operating and non-operating positions.

6. Granulator as defined in any one of claims 1 to 5, characterized in that the lower feed roller (20) and/or the shearing blade roller (24) are supported in their respective operating positions by supporting elements (46).

7. Granulator as defined in any one of claims 1 to 6, characterized in that the lower feed roller (20) and/or the shearing blade roller (24) are lockable on both sides in their respective operating positions.

8. Granulator as defined in any one of claims 1 to 7, characterized in that the locking means (44) of the lower feed roller (20) and/or the shearing blade roller (24) in the operating and/or non-operating position is releasable by means of an attachable handling device (48) with a two-handed operation, and that the handling device (48) comprises a bar (52) forming a lever for pivoting the roller(s) (20; 24) from the one position into the other.

## Revendications

1. Dispositif de granulation (10) de matériaux extrudés (18) comprenant un dispositif d'introduction (20, 22) destiné à saisir le matériau extrudé et à le transporter à un cylindre à couteaux de cisaillement (24) consécutif tournant dans le sens opposé à la direction du transport du matériau extrudé, lequel travaille en étant opposé à un couteau enclume fixe (32), dans lequel le dispositif d'introduction comprend des cylindres d'introduction inférieur (20) et supérieur (22) dont l'un au moins peut être entraîné, dans lequel un couteau de raclage (30) est associé au cylindre d'introduction inférieur et dans lequel le couteau de raclage et le couteau enclume sont fixés à un support (26) disposé entre le cylindre d'introduction inférieur et le cylindre à couteaux de cisaillement,
caractérisé en ce que le cylindre d'introduction inférieur (20) peut être déplacé entre une position en service et une position hors service, en étant éloigné du support (26) et du couteau de raclage (30) dans sa position hors service, et en ce que le cylindre d'introduction inférieur (20) peut être verrouillé dans sa position en service.

2. Dispositif de granulation (10) de matériau extrudé (18) comprenant un dispositif d'introduction (20, 22) destiné à saisir le matériau extrudé et à le transporter à un cylindre à couteaux de cisaillement (24) consécutif tournant dans le sens opposé à la direction du transport du matériau extrudé, lequel travaille en étant opposé à un couteau enclume fixe (32), dans lequel le dispositif d'introduction comprend des cylindres d'introduction inférieur (20) et supérieur (22) dont l'un au moins peut être entraîné, dans lequel un couteau de raclage (30) est associé au cylindre d'introduction inférieur et dans lequel le couteau de raclage et le couteau enclume sont fixés à un support (26) disposé entre le cylindre d'introduction inférieur et le cylindre à couteaux de cisaillement, caractérisé en ce que le cylindre à couteaux de cisaillement (24) peut être déplacé entre une position en service et une position hors service, en étant éloigné du support (26) et du couteau enclume (32) dans sa position hors service, en ce que le cylindre à couteaux de cisaillement (24) peut être verrouillé dans sa position en service, et en ce que le cylindre d'introduction inférieur (20) peut le cas échéant être déplacé entre une position en service et une position hors service, en étant éloigné du support (26) et du couteau de raclage (30) dans sa position hors service, et le cylindre d'introduction inférieur (20) pouvant être verrouillé dans sa position en service.

3. Dispositif de granulation selon la revendication 1 ou 2, caractérisé en ce que le cylindre d'introduction inférieur (20) et/ou le cylindre à couteaux de cisaillement (24) peuvent être verrouillés dans leur position hors service.

4. Dispositif de granulation selon l'une quelconque des revendications 1 à 3, caractérisé en ce que le support (26) peut être déplacé d'une position en service à une position hors service et peut être fixé dans la position en service.

5. Dispositif de granulation selon l'une quelconque des revendications 1 à 4, caractérisé en ce que le cylindre d'introduction inférieur (20) et/ou le cylindre à couteaux de cisaillement (24) peuvent basculer entre leurs positions en service et hors service respectives.

6. Dispositif de granulation selon l'une quelconque des revendications 1 à 5, caractérisé en ce que le cylindre d'introduction inférieur (20) et/ou le cylindre à couteaux de cisaillement (24) sont supportés dans leurs positions en service respectives par des éléments d'appui (46).

7. Dispositif de granulation selon l'une quelconque des revendications 1 à 6, caractérisé en ce que le cylindre d'introduction inférieur (20) et/ou le cylindre à couteaux de cisaillement (24) peuvent être verrouillés des deux côtés dans leurs positions en service respectives.

8. Dispositif de granulation selon l'une quelconque des revendications 1 à 7, caractérisé en ce que le verrouillage (44) du cylindre d'introduction inférieur (20) et/ou du cylindre à couteaux de cisaillement (24) dans leurs positions en service et/ou hors service peut être supprimé au moyen d'un dispositif de maniement (48) à commande à deux mains démontable, et en ce que le dispositif de maniement (48) comprend un arceau (52) qui forme un levier pour faire basculer le(s) cylindre(s) (20; 24) d'une position dans l'autre.
